Europäisches Patentamt

European Patent Office

Office européen des brevets

(11) Veröffentlichungsnummer: **0 275 565 B1**

# (12) EUROPÄISCHE PATENTSCHRIFT

(45) Veröffentlichungstag der Patentschrift: **26.06.91**

(51) Int. Cl.⁵: **F01N 3/28**

(21) Anmeldenummer: **87119403.1**

(22) Anmeldetag: **31.12.87**

(54) **Vorrichtung für die katalytische Reinigung von Fahrzeug-Abgasen.**

(30) Priorität: **02.01.87 DE 3700070**

(43) Veröffentlichungstag der Anmeldung:
**27.07.88 Patentblatt 88/30**

(45) Bekanntmachung des Hinweises auf die
Patenterteilung:
**26.06.91 Patentblatt 91/26**

(84) Benannte Vertragsstaaten:
**DE FR IT SE**

(56) Entgegenhaltungen:
EP-A- 0 176 722    EP-A- 0 193 072
DE-A- 2 211 522    DE-A- 2 301 646
DE-A- 2 364 425    DE-A- 3 402 916
DE-A- 3 433 938    FR-A- 2 200 886
US-A- 4 043 761    US-A- 4 155 980

(73) Patentinhaber: **Firma J. Eberspächer
Eberspächer Strasse 24
W-7300 Esslingen(DE)**

(72) Erfinder: **Wörner, Siegfried
Schönbuchstr. 32
W-7300 Esslingen(DE)**
Erfinder: **Zacke, Peter, Dr.
Schierbacher Strasse 62
W-7321 Albershausen(DE)**
Erfinder: **Wirth, Georg
Teckstrasse 13
W-7312 Kirchheim/Teck(DE)**

(74) Vertreter: **Klunker . Schmitt-Nilson . Hirsch
Winzererstrasse 106
W-8000 München 40(DE)**

Rank Xerox (UK) Business Services

## Beschreibung

Die Erfindung bezieht sich auf eine Vorrichtung gemäß Oberbegriff des Anspruchs 1 bzw. des Anspruchs 4.

Aus dem Dokument EP-A-0 193 072, Fig. 3, ist eine Abgasreinigungsvorrichtung gemäß Oberbegriff des Anspruchs 1, also mit an das Gehäuse herangeführter Innenschale, bekannt. Jeweils ein Stück vor der Stirnseite des Monolithen wird der Durchmesser der Innenschale größer als der Monolithdurchmesser. Stirnseitig ist die Distanzmatte durch einen gesonderten Dichtring gegen Abgaseinwirkung geschützt.

Aus dem Dokument EP-A-0 193 072, Fig. 1, ist eine Abgasreinigungsvorrichtung gemäß Oberbegriff des Anspruchs 4, also mit mehrteiliger und jeweils einen Monolith-Halterungsbereich aufweisender Innenschale, bekannt. Die Innenschale verläuft im Bereich der Monolithkanten kegelförmig. Ein Schutz für die Distanzmatte in demjenigen Bereich, wo der betreffende Innenschalenteil endet, ist nicht vorgesehen.

Der Erfindung liegt die Aufgabe zugrunde, Abgasreinigungen der eingangs genannten Art mit besserem Schutz der Distanzmatte gegenüber nachteiligen Einwirkungen der Abgaspulsationen und mit lagesicherer Monolithfestlegung im Gehäuse zu schaffen.

Zwei erfindungsgemäße Lösungen sind in den kennzeichnenden Teilen der Ansprüche 1 und 4 angegeben.

Die Distanzmatte ist dadurch besonders gut geschützt und langzeittauglich, daß die Innenschale eng an die Stirnfläche des Monolithen geführt deren äußeren Randbereich geringfügig überdeckt und daß außerdem die Schutzlage vorgesehen ist. Die Längs-Wärmedehnungsunterschiede zwischen dem Gehäuse und der Innenschale werden funktionssicher aufgenommen.

Die in den Ansprüchen 1 und 4 angesprochene Schutzlage besteht vorzugsweise aus hitzefestem Gewebe, insbesondere in Form mineralischen oder metallischen Gewebes. Besonders bevorzugt ist Silikatgewebe. Die Distanzmatte besteht vorzugsweise aus Quellmaterial.

Wenn in den Ansprüchen 1 und 4 davon gesprochen ist, daß die Distanzmatte in dem Raum zwischen dem Gehäuse und dem Monolithen angeordnet ist, dann soll dies nicht bedeuten, daß die Distanzmatte zwingend mit ihrer Außenseite am Gehäuse und mit ihrer Innenseite am Monolithen anliegt. Vielmehr kann, muß aber nicht, beispielsweise die Innenschale außenseitig der Distanzmatte zwischen dieser und dem Gehäuse oder innenseitig von der Distanzmatte, insbesondere bereichsweise, zwischen dieser und dem Monolithen liegen. Die Ausdrucksweise, daß "die Innenschale an das Gehäuse herangeführt ist", bedeutet nicht zwingend eine unmittelbare, dortige Anlage der Innenschale an dem Gehäuse. Vielmehr kann, muß aber nicht, dort noch eine Zwischenlage vorhanden sein.

Es ist bevorzugt, die Innenschale nur für eine relativ kurze, axiale Länge an das Gehäuse heranzuführen und dort an diesem zu befestigen, dann aber wieder die Innenschale auf Abstand von dem Gehäuse zu führen und dort einen direkten oder indirekten Halterungseingriff mit dem Monolithen vorzusehen. Dies steigert die Lagefestigkeit der Halterung des Monolithen. Die Befestigung der Innenschale am Gehäuse erfolgt vorzugsweise an einer Stelle, an der sich ein Endbereich des Monolithen befindet.

Die Innenschale kann, von dem jeweiligen Übergangsbereich kommend, über die Länge des Monolithen durchgehen. Bevorzugt ist es jedoch, die Innenschale ein Stück hinter dem betreffenden Ende des Monolithen enden zu lassen, so daß man beispielsweise im Fall eines im Gehäuse angeordneten Monolithen zu zwei beabstandeten Innenschalenteilen kommt. Es ist als günstig bevorzugt, die monolithseitigen Endbereich der Innenschalenteile mit umfangsmäßig verteilten, elastischen Zungen zur Halterung des Monolithen auszubilden, um hier den unterschiedlichen Wärmedehnungen zwischen dem Monolithen und der Innenschale bzw. dem Gehäuse Rechnung zu tragen. Die Zungen sind vorzugsweise durch im wesentlichen Omegaförmige Ausstanzungen gebildet, was die radiale Elastizität der Zungen fördert und dennoch relativ große Kontaktflächen zwischen den Zungen und dem Monolithen bzw. zwischen den Zungen und der außerhalb davon liegenden, zusätzlichen anpressend wirkenden Distanzmatte sicherstellt.

Das Vorsehen einer Innenschale hat hauptsächlich den Zweck, das Gehäuse von der unmittelbaren Abgaseinwirkung abzukoppeln und kälter zu halten. Dieser Zweck wird durch einen Abstand zwischen der Innenschale und dem Gehäuse im Übergangsbereich erfüllt. Steigern läßt sich dieser Effekt jedoch noch dadurch, daß man im Übergangsbereich zwischen dem Gehäuse und der Innenschale eine Isoliermatte anordnet. Diese Isoliermatte kann insbesondere eine sogenannte Quellmatte aus einem an sich bekannten Material sein, das unter Wärmeeinwirkung aufquillt. Es kommt auch eine federnd wirkende Kombination aus Metall und Keramikfasern in Betracht. Ferner kann man vorsehen, die Isoliermatte stirnseitig durch einen Ring zu schützen, insbesondere aus Quellmaterial oder als elastisch abdichtender Ring oder durch eine hitzefeste Auflage, wobei die Isoliermatte aus weniger anspruchsvollem Material bestehen kann. Im Vordergrund steht hierbei ein Schutz der Isoliermatte gegen Auswaschung und Materialaustragung infolge der Abgaspulsationen.

Eine besonders geschütze und von Haus aus in gewissem Ausmaß abgasabdichtende Ausbildung des anschlußbereichsseiten Endes der Innenschale läßt sich, wie bevorzugt, dadurch erreichen, daß dieses Ende in einem Schiebsitz zwischen dem Gehäuse und dem betreffenden Abgasleitungsende sitzt. Es ist möglich, dort zusätzlich einen Dichtungsring vorzusehen.

Die Lagesicherheit der Halterung des Monolithen läßt sich weiter dadurch steigern, daß man zwischen der Innenschale und dem Monolithen mindestens eine elastische Zwischenlage vorsieht, die dort vorzugsweise durch Erhöhung der Reibung die Übertragung höherer Halterungskräfte sicherstellt und den direkten Kontakt zwischen dem Metall der Innenschale und dem Monolithen ausschaltet.

Vorzugsweise weist die Vorrichtung zwei oder noch mehr Monolithen in Längsrichtung des Gehäuses hintereinander auf, so daß man die erforderlich große, katalytisch wirkende Fläche bei möglichst kleinem Durchmesser der Vorrrichtung erreichen kann.

In diesem Fall ist es bevorzugt, die Innenschale dreiteilig zu gestalten, wobei das mittlere Teil der Innenschale durch Schweißung oder Sickenverbindung im Gehäuse befestigt ist. Das mittlere Teil der Innenschale weist dann vorzugsweise beidendig Halterungsbereiche für die beiden Monolithen in einer Ausbildung auf, wie sie weiter vorn bereits für den Monolith-Halterungsbereich der Innenschale bzw. der zwei Innenschalenteile geschildert worden ist.

Wenn man die Innenschale durch Schweißung am Gehäuse befestigt, ist die Ausgestaltung als Lochschweißung als besonders fertigungsrationell bevorzugt.

Die Erfindung und Weiterbildungen der Erfindung werden im folgenden anhand von zeichnerisch dargestellten Ausführungsbeispielen noch näher erläutert. Es zeigen:

Fig. 1, 2 und 3
jeweils einen Längsschnitt durch einen Teil einer Vorrichtung zur katalytischen Abgasreinigung, wobei in jeder der Zeichnungen mehrere Varianten eingezeichnet sind.

Bei allen Ausführungsbeispielen sind in dem Gehäuse 2 zwei Monolithe 4 axial hintereinander angeordnet. Zeichnerisch dargestellt ist jeweils die linke Häfte der Vorrichtung, die man sich nach rechts spiegelbildlich ergänzt denken muß.

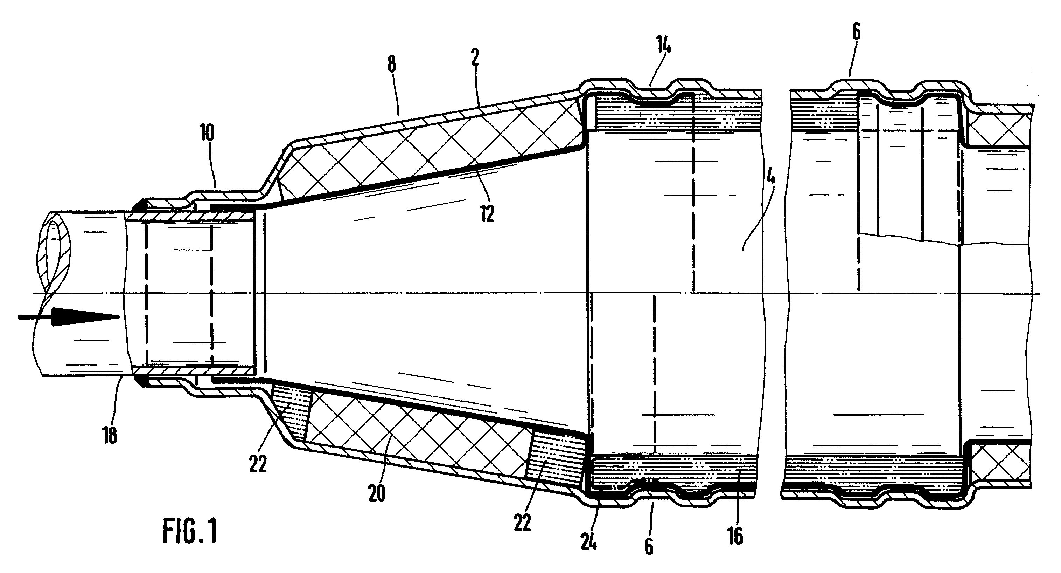

Das in Figur 1 dargestellte Gehäuse 2 der Vorrichtung besteht aus einem mittleren Monolith-Aufnahmebereich 6, der - abgesehen von einer Anzahl umlaufender Sicken zylindrisch ist, rechts und links daran anschließend jeweils einem im wesentlichen kegelstumpfförmigen Übergangsbereich 8 sowie am Ende des jeweiligen Übergangsbereichs 8 jeweils einem im wesentlichen zylindrischen Anschlußbereich 10. Das Gehäuse 2 besteht aus Stahlblech und ist vorzugsweise aus zwei Halbschalen längs einer Axialschnittebene zusammengesetzt.

Vom in Figur 1 erkennbaren, linken Anschlußbereich 10 aus erstreckt sich eine Innenschale 12 längs des Übergangsbereichs 8 und mindestens für ein Stück der Länge des Aufnahmebereichs 6 entlang dieses Aufnahmebereichs 6. Die Innenschale 12 beginnt links ein Stück hinter dem Ende des Anschlußbereichs 10 und hat dort einen geringen radialen Abstand zum Gehäuse 2. Die Innenschale 12 verläuft im Übergangsbereich 8 parallel zum Gehäuse 2 mit einem radialen Abstand im Bereich von 2 bis 15 mm. Am Ende des Übergangsbereichs 8 ist die Innenschale 12 nach außen umgebogen und liegt von dort an von innen am Gehäuse 2 an. Die Innenschale 12 ist mindestens im linken Endbereich des Aufnahmebereichs 6 durch eine nach innen ausgeprägte Sicke 14 des Gehäuses 2 formschlüssig festgelegt.

Im Aufnahmebereich 6 sind zwei Monolithe 4 mit axialem Abstand gehaltert, von denen in Figur 1 der linke eingezeichnet ist. Der Monolith 4 ist zylindrisch und besteht aus Keramikmaterial, das in Axialrichtung von einer Vielzahl von Kanälen durchzogen ist, die mit einer katalytisch wirkenden Substanz bedampft sind. Zwischen der Innenschale 12 und dem Monolithen 4 ist im Aufnahmebereich 6 eine Distanzmatte 16 mit einer Dicke von 2 bis 15 mm angeordnet, die links etwas vor den Stirnseiten den Monolithen 4 endet. Der Abstand der Innenschale 12 vom Gehäuse 2 ist am Übergang zum Aufnahmebereich 6 so gewählt, daß die Innenschale 12 die Stirnseite des Monolithen 4 am Rand geringfügig überdeckt. Dadurch wird der Monolith 4 axial gehaltert und eine gewisse Abdichtung gegen Umströmung des Monolithen 4 geschaffen.

In den Anschlußbereich 10 ist von links her das Ende einer Abgasleitung 18 eingesetzt, das mit geringem Spiel in das Ende der Innenschale 12 ragt. Die Abgasleitung 18 ist außen mit dem Anschlußbereich 10 verschweißt. Das linke Ende der Innenschale 12 ragt somit in einen Ringspalt zwischen dem Ende der Abgasleitung 18 und dem Anschlußbereich 10, so daß hier einerseits eine Möglichkeit zur axialen Ausdehnung und Zusammenziehung der Innenschale 12 gegeben ist, aber andererseits eine gewisse, labyrinthartige Abdichtung gegen ein Fortpflanzen der Abgaspulsationen in den Raum zwischen dem Gehäuse 2 und der Innenschale 12.

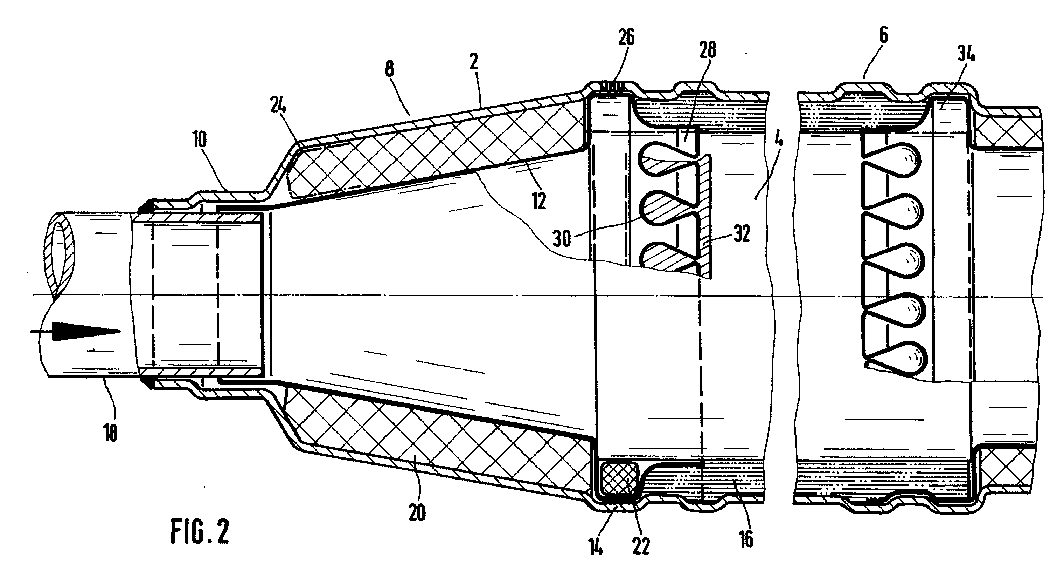

Im Übergangsbereich 8 ist zwischen dem Gehause 2 und der Innenschale 12 eine umlaufende Isoliermatte 20 vorgesehen. Diese kann links oder links und rechts durch einen Ring 22 aus unter Wärme aufquellendem Material (Figur 1 unten) oder durch eine stirnseitig umfassende Auflage 24 aus hitzefestem Gewebe (Figur 2 oben) zusätzlich geschützt sein. Entsprechendes gilt für die Distanzmatte 16, siehe Figur 2 unten und Figur 1 unten. Der Ring 22 besteht hier vorzugsweise aus verpreßtem, hitzebeständigem Drahtgestrick oder -gewebe, ggf. durchsetzt oder ummantelt mit hitzebeständigen, mineralischen Fasern. Die Ringe 22 können als Dichtringe ausgebildet sein, insbesondere um eine zusätzliche Sicherheit gegen Umströmen des Monolithen 4 zu schaffen.

In Figur 1 unten ist die Möglichkeit gezeichnet, daß die Innenschale 12 über die gesamte Länge des Aufnahmebereichs 6 durchgeht. Dies ist hinsichtlich der Wärmedehnungen unkritisch, weil die wärmeisolierend wirkende Distanzmatte 16 zwischenliegt und die Wärmeleitung vom Übergangsbereich 8 her längs der dünnen Innenschale 12 geringfügig ist.

In Figur 1 oben ist hingegen die Möglichkeit eingezeichnet, daß die Innenschale 12 ein Stück hinter der Stirnseite des Monolithen 4 endet.

Die in Figur 2 dargestellten Ausführungsbeispiele entsprechen den bereits geschilderten mit folgenden Änderungen:

In Figur 2, oben, ist die Befestigung der Innenschale 12 am Gehäuse 2 durch längs des Umfangs verteilte Lochschweißungen 26 am Anfang des Aufnahmebereichs 6 angedeutet.

Außerdem endet der erste Teil der Innenschale 12 ein Stück hinter dem linken Stirnende des Monolithen 4. In diesem Endbereich des ersten Innenschalenteils endet dieses in axial verlaufenden Zungen 28, die längs des Umfangs verteilt und durch Omega-förmige Ausstanzungen 30 gebildet sind. Die Zungen 28 liegen von außen am Monolithen 4, ggf. unter Zwischenschaltung einer elastischen Zwischenlage 32, an und schaffen eine großflächige aber dennoch elastische Halterung des Monolithen 4. Die Innenschale 12 ist neben der beschriebenen Befestigungsstelle durch Lochschweißungen 26 wieder nach innen von dem Gehäuse 2 weggeführt, damit die Zungen 28 direkt oder indirekt außen an dem Monolithen 4 anliegen. Dadurch ergibt sich hier nochmals eine gewisse Dichtwirkung. Die Distanzmatte 16 ist von der Mitte des Monolithen 4 bis zu diesem Durchmesserübergang geführt.

Im mittleren Bereich des Aufnahmebereichs 6 befindet sich ein mittleres Teil 34 der insgesamt dreiteiligen Innenschale 12. Das mittlere Teil 34 ist beidendig mit Zungen der beschriebenen Art 28 ausgebildet und durch Sickenverbindung im Endbereich des Monolithen 4 befestigt. Statt der in Figur 2 links gezeichneten Lochschweißungen 24 kann dort eine reine Sickenverbindung vorgesehen sein.

Sowohl die Isoliermatte 20 als auch die Distanzmatte 16 bestehen vorzugsweise aus Keramikfasern, die mit Blähglimmer durchsetzt sein können.

Das Blech der Innenschale 2 ist temperaturresistenter und dünner als das Blech des Gehäuses 2. Die Innenschale 12 bzw. deren Teile können aus Halbschalen gefertigt sein, wie für das Gehäuse 2 beschrieben.

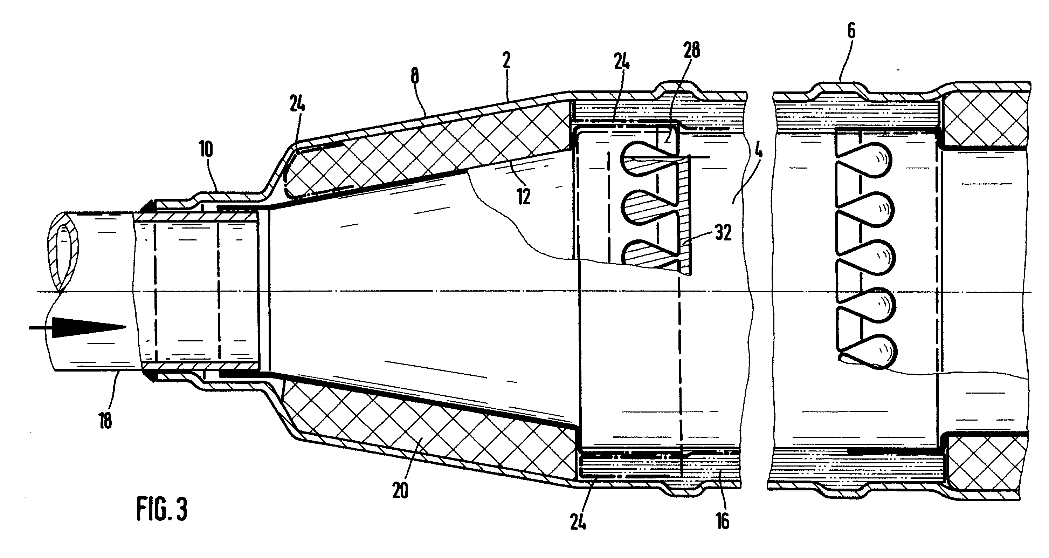

Die in Fig. 3 dargestellten Ausführungsvarianten unterscheiden sich von den zuvor beschriebenen Ausführungsbeispielen im wesentlichen dadurch, daß die Innenschale 12 im Monolith-Aufnahmebereich 6 nicht nach außen an das Gehäuse 2 herangeführt ist, sondern auch dort mit Abstand vom Gehäuse 2 bleibt. Die dortige Verbindung zwischen der Innenschale 12 und dem Monolithen 4 ist ähnlich wie bei Fig.2 mit Zungen 28, die durch Omega-förmige Ausstanzungen 30 gebildet sind, vorgenommen. Die Distanzmatte 16 ist etwa bis in den in Fig. 3 linken Stirnbereich des Monolithen 4 geführt, befindet sich also mit ihrem in Fig. 3 linken Endbereich zwischen dem in Fig. 3 rechten Endbereich des gezeichneten Abschnitts der Innenschale 12 und dem Gehäuse 2.

Die Distanzmatte 16 ist mindestens auf ihrer radial inneren Seite und in demjenigen Bereich, wo der gezeichnete Abschnitt der Innenschale 12 endet, mit einer Schutzlage 24, vorzugsweise aus Silikatgewebe, bedeckt, siehe Fig.3 oben. In Fig.3 unten ist eine Modifikation gezeichnet, bei der die Schutzlage 24 um den linken Endbereich der Distanzmatte 16 herumgeführt ist, also die Distanzmatte 16 radial innen, stirnseitig und radial außen abdeckt.

Generell wird darauf hingewiesen, daß der mittlere Abschnitt der Innenschale 12, der sich vom in den Figuren rechten Endbereich des gezeichneten linken Monolithen 4 über einen Zwischenbereich zwischen den beiden Monolithen 4 zu dem nicht gezeichneten, linken Endbereich des in den Figuren rechts anschließenden, ebenfalls nicht gezeichneten Monolithen 4 erstreckt, auch dadurch gehalten sein kann, daß er ohne direkten Kontakt mit dem Gehäuse 2 durch eine zwischengeschaltete Isoliermatte 20 gehalten ist, die vorzugsweise formschlüssig in einer entsprechenden Sicke des Gehäuses 2 festgelegt ist. Dies ist in Fig.3 rechts zeichnerisch angedeutet.

## Ansprüche

1. Katalytische Abgasreinigungsvorrichtung für die Reinigung von Fahrzeugmotor-Abgasen, mit:

   a) einem Gehäuse (2), das jeweils einen Anschlußbereich (10) für eine Abgasleitung (18) an den beiden Enden sowie jeweils einen Übergangsbereich (8) zwischen dem betreffenden Anschlußbereich (10) und einem Monolith-Aufnahmebereich (6) aufweist;

b) mindestens einem Monolithen (4), der mit einer katalytisch wirksamen Beschichtung versehen und in dem Monolith-Aufnahmebereich (6) in dem Gehäuse (2) gehaltert ist;

c) einer mindestens bereichsweise in dem Gehäuse (2) vorgesehenen Innenschale (12) aus temperaturbeständigem Blech, die

- in den Übergangsbereichen (8) mit Abstand von dem Gehäuse (2) angeordnet ist,
- mindestens in einem Teil des Monolith-Aufnahmebereichs (6) an das Gehäuse (2) herangeführt ist, und
- an den anschlußbereichsseitigen Enden frei für Wärmedehnungsbewegungen relativ zu dem Gehäuse (2) ausgebildet ist, und

d) einer in dem Raum zwischen dem Gehäuse (2) und dem Monolithen (4) angeordneten, unterschiedliche Wärmedehnungen von Gehäuse (2) und Monolith (4) erlaubenden Distanzmatte,

dadurch gekennzeichnet,

e) daß die Innenschale (12) jeweils eng an die übergangsbereichsseitige Stirnfläche des Monolithen (4) geführt deren äußeren Rand geringfügig überdeckt;

f) daß die Innenschale (12) in dem an das Gehäuse (2) herangeführten Bereich durch Schweißung (26) oder durch Sickenverbindung an dem Gehäuse (2) befestigt ist, und

g) daß die Distanzmatte (16) stirnseitig durch eine Schutzlage (24) geschützt ist.

2. Vorrichtung nach Anspruch 1,
dadurch gekennzeichnet,
daß die Innenschale (12) auf der der axialen Mitte des Monolithen (4) zugewandten Seite ihrer Befestigung an dem Gehäuse (2) auf Abstand von dem Gehäuse geführt ist und dort einen Halterungsbereich für den Monolithen (4) aufweist.

3. Vorrichtung nach Anspruch 1 oder 2,
dadurch gekennzeichnet,
daß die Innenschale (12), auf die Länge des Gehäuses (2) gesehen, mehrteilig ausgebildet ist und im Monolith-Aufnahmebereich (6) jeweils einen Halterungsbereich für den Monolithen (4) aufweist.

4. Katalytische Abgasreinigungsvorrichtung für die Reinigung von Fahrzeugmotor-Abgasen, mit:

a) einem Gehäuse (2), das jeweils einen Anschlußbereich (10) für eine Abgasleitung (18) an den beiden Enden sowie jeweils einen Übergangsbereich (8) zwischen dem betreffenden Anschlußbereich (10) und einem Monolith-Aufnahmebereich (6) aufweist;

b) mindestens einem Monolithen (4), der mit einer katalytisch wirksamen Beschichtung versehen und in dem Monolith-Aufnahmebereich (6) in dem Gehäuse (2) gehaltert ist;

c) einer mindestens bereichsweise in dem Gehäuse (2) vorgesehenen Innenschale (12) aus temperaturbeständigem Blech, die

- in den Übergangsbereichen (8) mit Abstand von dem Gehäuse (2) angeordnet ist,
- auf die Länge des Gehäuses (2) gesehen, mehrteilig ausgebildet ist,
- im Monolith-Aufnahmebereich (6) jeweils einen Halterungsbereich für den Monolithen (4) aufweist, und
- an den anschlußbereichsseitigen Enden frei für Wärmedehnungsbewegungen relativ zu dem Gehäuse (2) ausgebildet ist, und

d) einer in dem Raum zwischen dem Gehäuse (2) und dem Monolithen (4) angeordneten, unterschiedliche Wärmedehnungen von Gehäuse (2) und Monolith (4) erlaubenden Distanzmatte (16),

dadurch gekennzeichnet,

e) daß die Innenschale (12) jeweils eng an die übergangsbereichsseitige Stirnfläche des Monolithen (4) geführt deren äußeren Rand geringfügig überdeckt;

f) daß die Distanzmatte (16) mindestens in dem Bereich, der den Übergang zwischen dem Halterungsbereich (28) der Innenschale (12) und dem von der Innenschale (12) unabgedeckten Teil des Monolithen (4) überdeckt, durch eine innenseitige Schutzlage (24) geschützt ist.

5. Vorrichtung nach Anspruch 3 oder 4,
dadurch gekennzeichnet,
daß der jeweilige Halterungsbereich der Innenschale (12) am Ende mit umfangsmäßig verteilten, elastischen Zungen (28) ausgebildet ist.

6. Vorrichtung nach Anspruch 5,
dadurch gekennzeichnet,
daß die Zungen (28) durch im wesentlichen Omega-förmige Ausstanzungen (30) gebildet sind.

7. Vorrichtung nach einem der Ansprüche 1 bis 6,
dadurch gekennzeichnet,

daß jeweils im Übergangsbereich (8) eine Isoliermatte (20) zwischen dem Gehäuse (2) und der Innenschale (12) vorgesehen ist, Vorzugsweise als Quellmatte.

8. Vorrichtung nach einem der Ansprüche 1 bis 7,
dadurch gekennzeichnet,
daß die Isoliermatte (20) stirnseitig durch einen Ring (22) geschützt ist.

9. Vorrichtung nach einem der Ansprüche 1 bis 8,
dadurch gekennzeichnet,
daß die Isoliermatte (20) stirnseitig durch eine Schutzlage (24) geschützt ist.

10. Vorrichtung nach einem der Ansprüche 1 bis 9,
dadurch gekennzeichnet,
daß zwischen der Innenschale (12) und dem Monolithen (4) mindestens eine elastische Zwischenlage (32) vorgesehen ist.

11. Vorrichtung nach einem der Ansprüche 1 bis 10,
dadurch gekennzeichnet,
daß zwei Monolithen (4) in Längsrichtung des Gehäuses (2) hintereinander vorgesehen sind.

12. Vorrichtung nach Anspruch 11,
dadurch gekennzeichnet,
daß die Innenschale (12) dreiteilig ist, wobei das mittlere Teil der Innenschale im Gehäuse (2) gehalten ist.

13. Vorrichtung nach Anspruch 12,
dadurch gekennzeichnet,
daß das mittlere Teil der Innenschale beidendig Halterungsbereiche für die beiden Monolithen mit umfangsmäßig verteilten, elastischen Zungen, vorzugsweise gebildet durch im wesentlichen Omega-förmige Ausstanzungen, aufweist.

**Claims**

1. A catalytic exhaust gas purification device for purifying vehicle motor exhaust gases, comprising:
   a) a housing (2) having a connecting portion (10) for an exhaust gas line (18) at each of its two ends and having a transition portion (8) between each connecting portion (10) and a monolith receiving portion (6);
   b) at least one monolith (4) provided with a catalytically active coating and supported in the monolith receiving portion (6) in the housing (2);
   c) an inner shell (12) of temperature-resistant sheet metal which is provided at least in portions of the housing (2), said inner shell
   - being disposed in the transition portions (8) in a manner spaced from the housing (2),
   - being extended to the housing (2) in at least part of the monolith receiving portion (6), and
   - being formed on its ends on the side of the connecting portions such that it is free to perform thermal expansion movements relative to the housing (2), and
   d) a distance mat disposed in the space between the housing (2) and the monolith (4) and permitting different thermal expansions of housing (2) and monolith (4),
   characterized in
   e) that the inner shell (12) is extended closely to each face area of the monolith (4) on the side of the transition portions and slightly covers the outer edge thereof;
   f) that the inner shell (12), in the portion extended to the housing (2), is attached to the housing (2) by welding (26) or bead connection, and
   g) that the distance mat (16) is protected on each face side by a protective layer (24).

2. A device according to claim 1,
characterized in that the inner shell (12), on its mounting side to the housing (2) facing the axial centre of the monolith (4), extends in spaced manner from the housing and is provided there with a supporting portion for the monolith (4).

3. A device according to claim 1 or 2,
characterized in that the inner shell (12), as seen along the length of the housing (2), is of multi-part construction and comprises in each monolith receiving portion (6) a supporting portion for the monolith (4).

4. A catalytic exhaust gas purification device for purifying vehicle motor exhaust gases, comprising:
   a) a housing (2) having a connecting portion (10) for an exhaust gas line (18) at each of its two ends and having a transition portion (8) between each connecting portion (10) and a monolith receiving portion (6);
   b) at least one monolith (4) provided with a catalytically active coating and supported in the monolith receiving portion (6) in the housing (2);

c) an inner shell (12) of temperature-resistant sheet metal which is provided at least in portions of the housing (2), said inner shell

- being disposed in the transition portions (8) in a manner spaced from the housing (2),
- being of multi-part construction as seen along the length of the housing,
- having in each monolith receiving portion (6) a supporting portion for the monolith (4), and
- being formed on its ends on the side of the connecting portions such that it is free to perform thermal expansion movements relative to the housing (2), and

d) a distance mat (16) disposed in the space between the housing (2) and the monolith (4) and permitting different thermal expansions of housing (2) and monolith (4),

characterized in

e) that the inner shell (12) is extended closely to each face area of the monolith (4) on the side of the transition portions and slightly covers the outer edge thereof;

f) that the distance mat (16), at least in the portion covering the transition between the supporting portion (28) of the inner shell (12) and the part of the monolith (4) that is not covered by the inner shell (12), is protected by an inside protective layer (24).

5. A device according to claim 3 or 4,
characterized in that the respective supporting portion of the inner shell (12) is formed at its end with circumferentially distributed resilient tongues (28).

6. A device according to claim 5,
characterized in that the tongues (28) are formed by substantially omega-shaped stamped portions (30).

7. A device according to any one of claims 1 to 6,
characterized in that in each transition portion (8) there is provided an insulating mat (20) between the housing (2) and the inner shell (12), said mat being preferably a swell mat.

8. A device according to any one of claims 1 to 7,
characterized in that the insulating mat (20) is protected on its face side by a ring (22).

9. A device according to any one of claims 1 to 8,
characterized in that the insulating mat (20) is protected on its face side by a protective layer (24).

10. A device according to any one of claims 1 to 9,
characterized in that a resilient intermediate layer (32) is provided between the inner shell (12) and the monolith (4).

11. A device according to any one of claims 1 to 10,
characterized in that two monoliths (4) are provided one behind the other in the longitudinal direction of the housing (2).

12. A device according to claim 11,
characterized in that the inner shell (12) is formed of three parts, the central part of the inner shell being held in the housing (2).

13. A device according to claim 12,
characterized in that the central part of the inner shell has on both ends thereof supporting portions for the two monoliths with circumferentially distributed resilient tongues preferably formed by substantially omega-shaped stamped portions.

**Revendications**

1. Dispositif catalytique d'épuration des gaz d'échappement pour l'épuration des gaz d'échappement de moteurs de véhicule, comportant :

a) un carter (2) qui comporte une zone de raccordement (10) pour une conduite de gaz d'échappement (18) à chacune des deux extrémités, ainsi qu'une zone de transition (8) entre chaque zone de raccordement (10) concernée et une zone de réception de monolithe (6) ;

b) au moins un monolithe (4) qui comporte un revêtement catalytiquement actif et est retenu dans la zone de réception de monolithe (6) dans le carter (2) ;

c) une cuvette intérieure (12) en tôle thermiquement stable prévue dans le carter (2), au moins dans certaines zones, qui :

- est placée dans les zones de transition (8) à distance du carter (2) ;
- se rapproche du carter (2) au moins dans une partie de la zone de réception de monolithe (6) et
- aux extrémités situées du côté des zones de raccordement est conformée librement pour les mouvements de dilatation thermique par rapport au carter (2), et

d) un matelas de séparation placé dans l'intervalle entre le carter (2) et le monolithe (4), permettant des dilatations thermiques différentes du carter (2) et du monolithe (4), caractérisé en ce que :

e) la cuvette intérieure (12), se rapproche étroitement de la surface d'extrémité située du côté de la zone de transition du monolithe (4) dont elle recouvre légèrement le bord extérieur ;

f) la cuvette intérieure (12) est fixée au carter (2), dans la zone se rapprochant de celui-ci, par soudage (26) ou par sertissage, et

g) le matelas de séparation (16) est protégé frontalement par une couche protectrice (24).

2. Dispositif selon la revendication 1, caractérisé en ce que la cuvette intérieure (12) longe le carter (2) à distance de celui-ci du côté de sa fixation au carter (2) situé vers le centre axial du monolithe (4) et y comporte une zone de fixation pour le monolithe (4).

3. Dispositif selon la revendication 1 ou 2, caractérisé en ce que la cuvette intérieure (12), est, considérée suivant la longueur du carter (2), formée de plusieurs parties et comporte, dans chaque zone de réception du monolithe (6), une zone de fixation pour le monolithe (4).

4. Dispositif catalytique d'épuration des gaz d'échappement pour l'épuration des gaz d'échappement de moteurs de véhicule, comportant :

a) un carter (2) qui comporte une zone de raccordement (10) pour une conduite de gaz d'échappement (18) à chacune des deux extrémités, ainsi qu'une zone de transition (8) entre chaque zone de raccordement (10) concernée et une zone de réception de monolithe (6) ;

b) au moins un monolithe (4) qui comporte un revêtement catalytiquement actif et qui est retenu dans la zone de réception de monolithe (6) dans le carter (2) ;

c) une cuvette intérieure (12) en tôle thermiquement stable prévue dans le carter (2), au moins dans certaines zones, qui

- est placée dans les zones de transition (8) à distance du carter (2),
- est formée de plusieurs parties, considéré suivant la longueur du carter (2) ;
- comporte, dans chaque zone de réception de monolithe (6), une zone de fixation pour le monolithe (4), et

- aux extrémités situées vers les zones de raccordement, a une conformation libre pour les mouvements de dilatations thermique par rapport au carter (2), et

d) un matelas de séparation (16) placé dans l'intervalle entre le carter (2) et le monolithe (4), permettant des dilatations thermiques différentes du carter (2) et du monolithe (4), caractérisé en ce que :

e) la cuvette intérieure (12), se rapproche étroitement de la surface d'extrémité située du côté de la zone de transition du monolithe (4), dont elle recouvre légèrement le bord extérieur ;

f) le matelas de séparation (16) est, au moins dans la zone qui couvre la transition entre la zone de fixation (28) de la cuvette intérieure (12) et la partie du monolithe (4) non recouverte par la cuvette intérieure (12), protégé par une couche protectrice intérieure (24).

5. Dispositif selon la revendication 3 ou 4, caractérisé en ce que chaque zone de fixation de la cuvette intérieure (12) est formée à l'extrémité avec des languettes élastiques (28) réparties sur la périphérie.

6. Dispositif selon la revendication 5, caractérisé en ce que les languettes (28) sont formées par des languettes de découpage (30) sensiblement en oméga.

7. Dispositif selon l'une des revendications 1 à 6, caractérisé en ce qu'il est prévu dans chaque zone de transition (8) un matelas isolant (20) entre le carter (2) et la cuvette intérieure (12), de préférence sous forme de matelas gonflant.

8. Dispositif selon l'une des revendications 1 à 7, caractérisé en ce que le matelas isolant (20) est protégé frontalement par un anneau (22).

9. Dispositif selon l'une des revendications 1 à 8, caractérisé en ce que le matelas isolant (20) est protégé frontalement par une couche protectrice (24).

10. Dispositif selon l'une des revendications 1 à 9, caractérisé en ce qu'il est prévu entre la cuvette intérieure (12) et le monolithe (4) au moins une couche intermédiaire (32) élastique.

11. Dispositif selon l'une des revendications 1 à 10, caractérisé en ce qu'il est prévu deux monolithes (4) l'un après l'autre dans la direction de la longueur du carter (2).

12. Dispositif selon la revendication 11, caractérisé en ce que la cuvette intérieure (12) est en trois parties, la partie centrale de la cuvette intérieure étant maintenue dans le carter (2).

13. Dispositif selon la revendication 12, caractérisé en ce que la partie centrale de la cuvette, intérieure comporte aux deux extrémités des zones de fixation pour les deux monolithes avec des languettes élastiques réparties sur la périphérie, formées de préférence par des découpages sensiblement en oméga.

FIG.1

EP 0 275 565 B1

FIG. 2

EP 0 275 565 B1

FIG.3